Europäisches Patentamt

European Patent Office

Office européen des brevets

(19)

(11) **EP 1 355 390 A1**

(12) **DEMANDE DE BREVET EUROPEEN**

(43) Date de publication:
**22.10.2003 Bulletin 2003/43**

(51) Int Cl.⁷: **H01S 3/00**, G02B 6/16,
G02B 6/34, H04B 10/17,
H01S 3/067

(21) Numéro de dépôt: **03290928.5**

(22) Date de dépôt: **15.04.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **15.04.2002 FR 0204677**

(71) Demandeur: **ALCATEL
75008 Paris (FR)**

(72) Inventeurs:
• **Labidi, Hedi**
**75017 Paris (FR)**
• **De Barros, Carlos**
**92100 Boulogne-Billancourt (FR)**

• **Loury, Hervé**
**35210 Chatillon-En-Vendelais (FR)**
• **Bonnet, Xavier**
**78470 St Remy les Chevreuse (FR)**
• **Riant, Isabelle**
**91400 Orsay (FR)**
• **Guerin, Jean-Jacques**
**92160 Antony (FR)**

(74) Mandataire: **Sciaux, Edmond et al
Compagnie Financière Alcatel
Département de Propriété Industrielle,
5, rue Noel Pons
92734 Nanterre Cedex (FR)**

(54) **Filtre équaliseur de gain dynamique**

(57)    Filtre optique accordable comprenant un réseau de Bragg à long pas (5) inscrit dans une portion de guide d'onde optique (10) comportant un coeur et une gaine optique (11), caractérisée en ce que la portion du guide d'onde comportant le réseau (5) est au moins partiellement immergé dans un milieu externe constitué de deux sections distinctes, une première section (1) dont l'indice de réfraction est plus élevé que celui de la gaine optique (11) et une seconde section (2) dont l'indice de réfraction est plus faible que celui de la gaine optique (11), le réseau à long pas étant au moins partiellement immergé dans une desdites sections de manière à accorder quasiment indépendamment la longueur d'onde et/ou le contraste de la réponse spectrale du filtre.

FIG_1

EP 1 355 390 A1

## Description

La présente invention concerne le domaine des filtres optiques constitués de réseaux de Bragg photo-inscrits dans des fibres optiques et plus particulièrement des filtres non réflecteurs à couplage dans les modes de gaines pour une application à des égaliseurs de gain.

Les filtres égaliseurs de gain, connus également sous l'acronyme de GFF pour Gain Flattening Filter en anglais, sont intégrés dans des systèmes optiques et sont généralement associés à des amplificateurs optiques disposés dans des répéteurs optiques répartis régulièrement le long de lignes de transmission. Les amplificateurs optiques ne fournissent généralement pas une amplification égale pour toutes les longueurs d'onde des signaux transmis sur les différents canaux d'une même ligne de transmission. En particulier, avec le développement des applications de transmission dense par multiplexage en longueur d'onde (DWDM, pour Dense Wavelength Division Multiplexing), les disparités d'amplification sur une bande passante donnée ont tendance à s'accentuer. Il est donc nécessaire d'associer aux amplificateurs en ligne des filtres égaliseurs de gain qui permettent de rétablir les disparités d'amplification des différents canaux de transmission d'un système optique.

Or, un système optique est souvent évolutif et il n'est pas rare que les paramètres d'un composant optique, tel qu'un égaliseur de gain, ne soient plus du tout adaptés aux spectres de transmission réels. Par exemple, une telle évolution peut être due à un vieillissement, à une variation de température, à des interventions localisées sur la ligne ou à des ajouts de modules optiques ou de canaux optiques de transmission après l'installation de la ligne. Les paramètres préalablement fixés des différents composants du système optique deviennent alors inadaptés.

De plus, dans le cas d'amplificateurs à fibre (dopée Erbium ou amplificateur Raman), les amplificateurs sont associés à des lasers de pompe dont les performances sont fixées lors de leur installation. Or, les amplificateurs tout comme les lasers de pompe sont souvent standardisés et pas forcément bien adaptés aux conditions de fonctionnement dans lesquels ils sont placés, ni à fortiori aux évolutions de celles ci.

Concernant les problèmes spécifiques liés à l'évolution des systèmes optiques, on se reportera à l'article de Simon P. Parry et al, « Dynamically Flattened Optical Amplifier», TU4, OFC 2001 qui expose les raisons d'une nécessité de réaliser des composants optiques accordables pour pallier les dérives dans le temps des systèmes optiques.

Il est donc nécessaire de réaliser des filtres égaliseurs qui permettent d'accorder dynamiquement leur réponse spectrale pour correspondre aux évolutions des conditions de fonctionnement des systèmes optiques dans lesquels ils sont disposés.

Il est également nécessaire de prévoir un conditionnement adapté permettant d'accorder facilement sur une large gamme spectrale et sans pertes de tels filtres égaliseurs de gain (connus comme DGE pour Dynamical Gain Equalizer).

Les filtres égaliseurs dynamiques peuvent être fibrés tels que les filtres Mach Zehnder ou les filtres acousto-optique par exemple, ou en espace libre tel qu'un rotateur de Faraday. Cependant de tels égaliseurs de gain dynamiques présentent l'inconvénient d'avoir de fortes pertes d'insertion (IL<6dB, Insertion Losses) et de dépendance à la polarisation (PDL<0.3 dB, Polarisation Dependent Losses). En particulier, le conditionnement de tels filtres est complexe et fait généralement appel à des montages de type MEMS ou MEOMS (respectivement pour Micro Electro Mechanical Systems et Micro Electro-Optical Mechanical Systems).

Les filtres égaliseurs peuvent également être constitués par des réseaux de Bragg photo-inscrits sur des portions de guides d'onde tels que des fibres optiques ou des guides d'ondes planaires. Un tel filtre constitue un composant intégré à un guide optique et permet de réduire considérablement les pertes d'insertion ou de dépendance à la polarisation.

Un guide d'onde est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_1$ et de la gaine $n_2$ sont tels que $n_1 > n_2$. Ainsi, le coeur et la gaine forment un guide d'onde. Comme cela est bien connu, la propagation d'un signal optique dans un guide d'onde monomode se décompose en un mode fondamental guidé dans le coeur et en des modes secondaires guidés sur une certaine distance dans l'ensemble coeur-gaine optique, appelés également modes de gaine. La gaine est elle-même entourée d'un milieu extérieur d'indice de réfraction $n_3 >$ ou $< n_2$. L'ensemble coeur-gaine associé au milieu extérieur forme à nouveau un guide d'onde.

Le coeur et/ou la gaine du guide peuvent être dopés de manière à être rendus photosensibles pour une inscription de réseau de Bragg, par exemple avec du germanium (Ge). Les réseaux classiquement utilisés pour des égalisations de gain sont des réseaux en angle ou réseaux inclinés, connus sous le terme de SBG pour Slanted Bragg Grating en anglais, ou des réseaux à long pas, connus sous le terme de LPG pour Long Period Grating en anglais. De tels réseaux sont conçus pour permettre un couplage du mode fondamental dans les modes de gaine sans réflexion à la longueur d'onde de couplage.

Dans le cas d'un réseau à long pas, la réponse spectrale du filtre dépend de l'indice effectif du coeur $n_{effCoeur}$ du guide ainsi que de l'indice effectif de la gaine $n_{effGaine}$. En effet, la relation de Bragg pour les réseaux à long pas s'exprime comme suit :

$$\lambda_B = \Lambda(n_{effCoeur} - n_{effGaine}),$$

avec $\Lambda$ le pas du réseau LPG.

Cette particularité des réseaux à long pas les rend particulièrement bien adaptés à des applications de filtres accordables car une action localisée sur le coeur, sur la gaine et/ou sur le milieu extérieur à la gaine peut induire une modification d'un des indices effectifs et donc de la longueur de Bragg du filtre. De plus, les pertes d'insertion dans un tel filtre sont faibles et les méthodes de fabrication connues de tels filtres permettent d'obtenir des pertes de dépendance à la polarisation très faibles.

L'objet de la présente invention est de proposer un filtre optique accordable qui permette une égalisation de gain dynamique à partir d'un réseau de Bragg à long pas, dit LPG.

Le filtre selon l'invention peut également être appliqué aux compensateurs de pente dynamiques.

A cet effet, l'invention propose de modifier les conditions d'interface entre la gaine et le milieu extérieur. Le LPG est immergé, totalement ou partiellement, dans un milieu externe composé de deux sections distinctes permettant de modifier d'une part l'atténuation et d'autre part la longueur d'onde du filtre.

Il est ainsi possible d'obtenir une accordabilité de la longueur d'onde et du contraste de la réponse spectrale du filtre de façon quasi indépendante. Cette accordabilité peut avantageusement être dynamique.

L'invention a en outre pour objet de proposer un conditionnement avantageux d'un filtre accordable selon l'invention permettant de réaliser facilement l'accordabilité recherchée.

L'invention concerne également un système optique d'égalisation de gain intégrant des filtres optiques accordables selon l'invention, avantageusement conditionnés selon l'invention.

Plus particulièrement, la présente invention se rapporte à un filtre optique accordable comprenant un réseau de Bragg à long pas inscrit dans une portion de guide d'onde optique comportant un coeur et une gaine optique, caractérisée en ce que la portion du guide d'onde comportant le réseau est au moins partiellement immergé dans un milieu externe constitué de deux sections distinctes, une première section dont l'indice de réfraction est plus élevé que celui de la gaine optique et une seconde section dont l'indice de réfraction est plus faible que celui de la gaine optique, le réseau à long pas étant au moins partiellement immergé dans une desdites sections de manière à accorder de façon quasi indépendante la longueur d'onde et/ou le contraste de la réponse spectrale du filtre.

Selon une caractéristique, le réseau est au moins partiellement immergé dans chacune des sections du milieu externe.

Selon une autre caractéristique, le niveau d'immersion du réseau dans les sections du milieu externe est variable dynamiquement.

Selon les modes de réalisation, les sections du milieu externe sont composées de fluides, de gels ou de polymères.

L'invention concerne également un dispositif de conditionnement du filtre selon l'invention, caractérisé en ce que les sections du milieu externe sont disposées dans des réservoirs mobiles associés à des moyens de commande électromagnétiques.

Selon une caractéristique, chaque réservoir est composé d'un réceptacle contenant un matériau d'indice de réfraction distinct de celui de la gaine optique, le réceptacle étant entouré de moyens de contrôle électromagnétiques.

Selon les modes de réalisation, les moyens de commande électromagnétiques comportent une pluralité de bobines alimentées séparément en tension et en courant et/ou un anneau magnétique.

L'invention se rapporte également à un système optique d'égalisation de gain comportant une pluralité de filtres selon l'invention.

Selon une caractéristique, chaque filtre est accordé au moyen d'un dispositif de conditionnement de filtre selon l'invention.

Les particularités et avantages de la présente invention apparaîtront plus clairement à la lecture de la description qui suit, donnée à titre d'exemple illustratif et non limitatif, et faite en référence aux figures annexées dans lesquelles :

- la figure 1 est un schéma de principe d'un filtre selon l'invention ;
- les figures 2a et 2b sont des graphes illustrant l'effet de l'immersion du LPG dans un fluide sur le spectre de transmission du filtre ;
- la figure 3a illustre schématiquement un conditionnement du filtre selon un premier mode de réalisation selon l'invention ;
- la figure 3b illustre schématiquement un conditionnement du filtre selon un deuxième mode de réalisation selon l'invention ;
- la figure 4 est une vue de détail d'un réservoir du conditionnement de la figure 3a ou 3b ;
- la figure 5 illustre un système d'égalisation de gain à partir d'une pluralité de filtres selon l'invention ;
- la figure 6 est un graphe d'un spectre de transmission obtenu avec un système selon la figure 5.

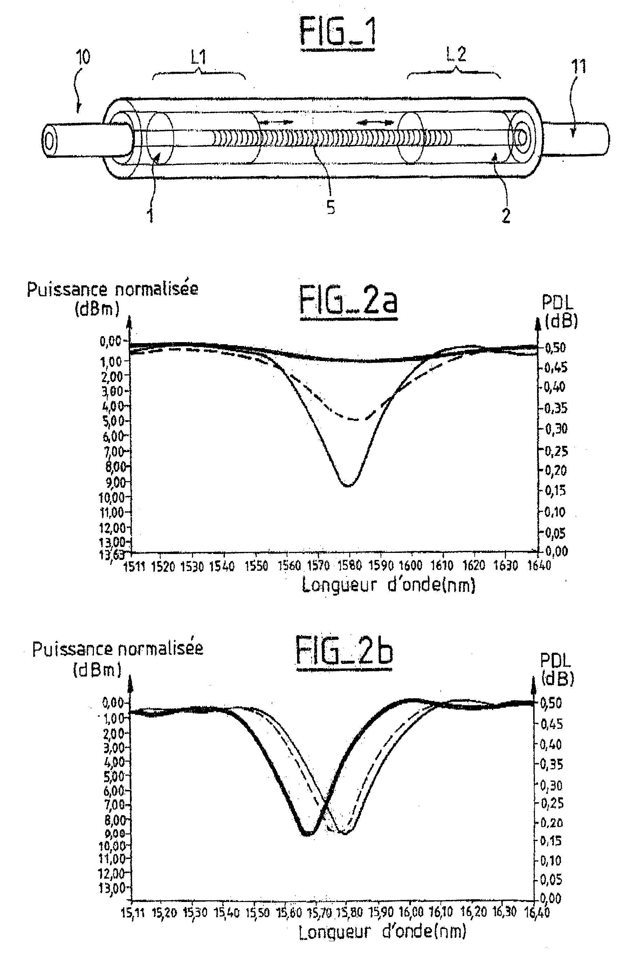

Le filtre optique selon l'invention, illustré schématiquement sur la figure 1, est constitué d'un réseau de Bragg à long pas 5, dit LPG, inscrit dans une portion de guide d'onde optique 10, tel qu'une fibre optique ou un guide d'onde planaire, comprenant un coeur entouré d'une gaine optique 11. Le réseau 5 peut être inscrit dans le coeur et/ou dans la gaine du guide d'onde 10, selon les modes de mise en oeuvre et les applications du filtre.

Selon l'invention, la portion du guide d'onde 10 comportant le réseau 5 est au moins partiellement immergé dans un milieu externe dont l'indice de réfraction est différent de l'indice de la gaine optique 11 du guide d'onde. Ce milieu externe est constitué de deux sections distinctes. Une première section 1 a un indice de réfraction plus élevé que celui de la gaine optique 11 et une seconde section 2 a un indice de réfraction plus faible que celui de la gaine optique 11. Les sections 1 et 2 du milieu externe peuvent être constituées de réservoirs contenant des fluides L1 et L2 tels que des huiles ou des gels par exemple. Les sections du milieu externe peuvent également être composées de polymères entourant des portions de la gaine optique 11 du guide 10.

L'immersion totale ou partielle d'une portion de guide 10 dans un milieu externe, dont l'indice de réfraction est différent de l'indice de la gaine 11, induit une modification des conditions d'interface entre la gaine et le milieu extérieur. Or, on a déjà mentionné qu'un LPG était particulièrement sensible aux modifications du milieu externe à la gaine du guide sur lequel il est inscrit. Ainsi, selon le niveau d'immersion du réseau à long pas dans une des sections du milieu externe, il est possible de modifier la réponse spectrale du filtre.

En particulier, les effets de l'immersion totale ou partielle d'un LPG dans un milieu externe dont l'indice de réfraction est supérieure à l'indice du guide comportant le LPG ont déjà été décrit dans l'article « Fiberoptic liquid level sensor using a long period grating » de S. Khaliq et al. paru dans O. letters, vol 26, Issue 16, p 1224.

Cet article décrit une application à un capteur de niveau de liquide. Un guide d'onde comportant un LPG est plongé dans un milieu externe ayant un indice de réfraction supérieur à l'indice de réfraction de la gaine optique. La variation de la zone d'immersion dans ce milieu externe entraîne une variation de la perte d'une partie de l'énergie du signal optique dans la gaine sur l'interface gaine / milieu extérieur par réfraction de Fresnel, alors que le restant de l'énergie est réfléchie. L'article décrit les effets du niveau d'immersion du LPG dans le milieu externe sur le minimum de transmission du signal optique dans le filtre pour une détection de niveau de liquide. Cet article décrit en outre l'apparition d'un second filtre à une longueur d'onde distincte du premier filtre, mais ce phénomène n'a pu être reproduit par le demandeur.

Contrairement à ce qui est décrit dans cet article, l'invention propose d'exploiter les effets de l'immersion d'un réseau dans un milieu externe pour effectuer une accordabilité du filtre en contraste. De plus, le réseau est en outre immergé dans un autre milieu externe d'indice inférieur à l'indice de la gaine optique pour obtenir une accordabilité en longueur d'onde du filtre. Ainsi, selon l'invention le milieu externe est composé de deux sections distinctes pour une accordabilité de la réponse spectrale du filtre en contraste et en longueur d'onde.

En particulier, le contraste et la longueur d'onde de la réponse spectrale du filtre selon l'invention peuvent être accordés de façon quasi indépendante, de manière simultanée ou successivement. On entend par accordabilité quasi-indépendante de la longueur d'onde et du contraste le fait de dissocier presque complètement ces deux paramètres. En général, le fluide d'une des sections du milieu extérieur agit principalement sur un des paramètres et très légèrement sur l'autre. Néanmoins, par un choix approprié des composants du milieu extérieur et par un conditionnement optimisé, tel qu'il sera décrit par la suite, il est possible de dissocier les paramètres de longueur d'onde et de contraste l'un de l'autre pour accorder la réponse spectrale du filtre.

La figure 2a illustre la réponse spectrale d'un filtre LPG immergé dans une première section 1 dont l'indice de réfraction est supérieur à celui de la gaine optique. Le graphe reproduit trois conditions d'immersion du LPG dans un milieu externe au guide d'indice de réfraction de 1.51. Le guide d'onde est en silice.

La réponse spectrale reproduite en trait plein fin correspond à celle pour laquelle le LPG n'est pas du tout immergé, le milieu extérieur étant alors de l'air, la réponse spectrale en trait pointillés est celle pour laquelle le LPG est immergé à 40% dans la première section 1 du milieu externe et la réponse spectrale en trait plein épais est celle pour laquelle le LPG est totalement immergé dans la première section 1 du milieu externe.

Le niveau d'immersion du LPG dans un milieu d'indice de réfraction supérieur à celui de la gaine optique modifie donc directement la valeur de la transmission minimum du signal à travers le filtre selon la relation suivante :

$$T(\kappa, L, I) = \text{Cos}^2(\kappa.L) \cdot \text{Sin}^2[\pi/2.(L-I)/L]$$

Qualitativement, l'atténuation du filtre est liée à l'expansion des modes de gaines dans le milieu externe, diminuant ainsi l'intégrale de recouvrement entre le mode fondamental et les modes de gaine.

La figure 2b illustre la réponse spectrale d'un filtre LPG immergé dans une seconde section 2 dont l'indice de réfraction est inférieur à celui de la gaine optique. Le graphe reproduit trois conditions d'immersion du LPG dans un milieu externe au guide d'indice de réfraction de 1.33. Le guide d'onde est en silice.

La réponse spectrale reproduite en trait plein fin correspond à celle pour laquelle le LPG n'est pas du tout immergé, la réponse spectrale en trait pointillés est celle pour laquelle le LPG est immergé à 10% dans la seconde section 2 du milieu externe et la réponse spectrale en trait plein épais est celle pour laquelle le LPG est totalement immergé dans la seconde section 2 du milieu externe.

Le niveau d'immersion du LPG dans un milieu d'indice de réfraction inférieur à celui de la gaine optique modifie donc directement la valeur de la longueur d'onde du filtre. Qualitativement, cette modification de la longueur d'onde de Bragg du filtre est liée à une modification de la constante de propagation des modes de gaine le long de la portion immergée entraînant ainsi une modification de l'indice effectif du mode de gaine de couplage $n_{effGaine}$ impliquant un changement de la longueur d'onde selon la formule exposée précédemment $\lambda_B = \Lambda (n_{effCoeur} - n_{effGaine})$.

La combinaison de ces deux effets sur les modes de gaine, à savoir la modification de l'indice effectif des modes de gaine et leur expansion, permet de réaliser une accordabilité complète du filtre, tant en contraste qu'en longueur d'onde. Il a ainsi été possible d'obtenir un décalage de longueur d'onde de 40 nm et une variation en contraste jusqu'à une extinction totale.

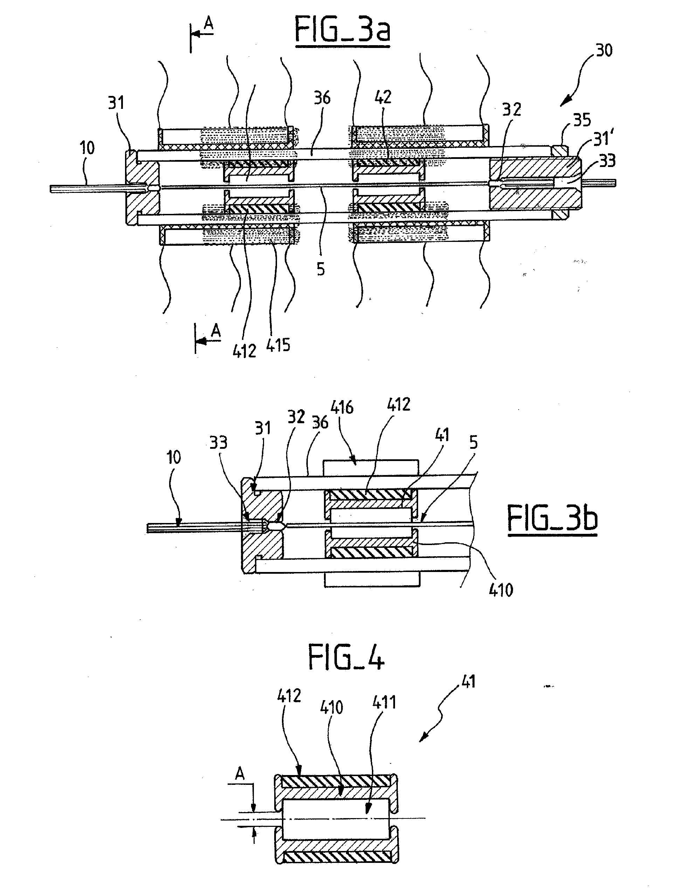

La figure 3a illustre schématiquement un premier mode de réalisation d'un conditionnement du filtre selon l'invention permettant de réaliser efficacement une accordabilité dudit filtre en contraste et en longueur d'onde.

Le guide d'onde optique, une fibre 10 dans l'exemple illustré, est positionné dans un emballage 30 et fixé dans des éléments mécaniques de maintient 31, 31', par exemple avec des colles optiques 32 et mécaniques 33 adaptées. De préférence, au moins un des éléments de maintient 31 est fixe, alors que l'autre 31' est mobile, par exemple au moyen d'un écrou 35 permettant de mettre la fibre 10 en tension.

Le réseau de Bragg constituant le filtre 5 est ainsi placé à l'intérieur d'une cavité ménagée dans l'emballage 30 qui présente une gaine diélectrique 36, telle qu'un tube en Pyrex ou autre. Des réservoirs 41 et 42 sont également disposés dans la cavité de l'emballage 30, à l'intérieur du tube diélectrique 36 et autour du guide optique 10. Ces réservoirs 41, 42 contiennent respectivement une première et une seconde section d'un milieu externe, tels que des huiles, gels ou polymères d'indice de réfraction déterminés pour l'accordabilité du filtre selon les principes décrits précédemment.

Chaque réservoir 41, 42 est en outre entouré de moyens de commande électromagnétiques 415 permettant un déplacement latéral de chaque réservoir le long du filtre 5 à l'intérieur de la cavité de l'emballage 30 pour une mise en contact des réservoirs 41, 42 avec la gaine 11 de la fibre 10 au niveau du réseau LPG 5.

La figure 4 illustre une vue de détail d'un réservoir 41 du conditionnement de la figure 3. Un tel réservoir 41 est constitué d'un réceptacle mécanique 410 renfermant un milieu dit externe 411 composé d'un matériau spécifiquement déterminé pour l'application au filtre accordable selon l'invention. Le matériau externe 411 peut être un fluide ou un polymère. Il est choisi selon divers critères incluant entre autre l'indice de réfraction, la viscosité, la surface de tension, le coefficient thermique d'expansion, le coefficient de température $Dn_D/DT$, sa compatibilité avec le réservoir. Le réceptacle 410 du réservoir 41 est en outre entouré de moyens de contrôle électromagnétiques 412, tels que des aimants.

Préférentiellement, le diamètre extérieur de l'aimant 412 est plus petit que le diamètre intérieur du tube diélectrique 36 et le diamètre extérieur du réceptacle 410 est ajusté au diamètre intérieur dudit tube 36 afin de permettre un déplacement des réservoirs 41, 42 par glissement à l'intérieur de la cavité du conditionnement 30 selon l'invention. En outre, les rugosités des matériaux constituant le réservoir 410 et le tube 36 sont telles que les frictions sont minimisées. En outre, il est préférable que le tube diélectrique 36 présente une symétrie non cylindrique en coupe transversale afin de permettre le déplacement des flux d'air et d'éviter un phénomène de piston lors du déplacement des réservoirs 41, 42.

Les moyens de contrôle électromagnétiques des réservoirs 412 sont couplés à des moyens de commande électromagnétiques 415 disposés à l'extérieur de la gaine 36 de l'emballage 30 selon l'invention. Selon le mode de réalisation illustré sur la figure 3, chaque moyen de commande électromagnétique 415 est composé de plusieurs bobines individuelles alimentées séparément en tension et en courant. Lorsqu'une même tension est appliquée à chaque bobine des moyens de contrôle 415, le champ magnétique est constant autour des réservoirs 41, 42 qui restent alors immobiles. En revanche, lorsqu'une tension différente est appliquée sur les différentes bobines des moyens de commande électromagnétique 415, un champ magnétique différentiel est créé et entraîne un déplacement des réservoirs 41, 42 au moyen des aimants 412 disposés autour de chaque réservoir.

Ainsi, en contrôlant l'alimentation de chaque bobine des moyens de commandes 415 extérieurs à l'emballage 30 selon l'invention, il est possible de provoquer des déplacements successifs ou simultanés de l'un ou l'autre réservoir 41, 42 afin d'immerger plus ou moins le filtre 5 dans l'un ou l'autre milieu externe.

La figure 3b illustre un deuxième mode de réalisation du conditionnement d'un filtre selon l'invention. Les mêmes éléments de la figure 3a sont désignés par les mêmes références.

Selon ce deuxième mode de réalisation, les moyens de commandes couplés aux aimants 412 des réservoirs peuvent être composés d'anneaux magnétiques 416 disposés autours du tube diélectrique 36. L'aimantation de chaque réservoir 41 permet de déplacer ces derniers solidairement avec chaque anneau 416. Un tel anneau magnétique peut être déplacé au moyen d'un outil externe par exemple et le réservoir couplé à cet anneau sera alors déplacé solidairement. Ce mode de réalisation permet de s'affranchir d'une alimentation externe en tension et courant. Ce mode de réalisation est particulièrement adapté à des ajustements de filtres lors de leur installation, les anneaux magnétiques étant fixés lorsque l'ajustement est accompli.

En revanche, pour une accordabilité dynamique du filtre, le mode de réalisation illustré sur la figure 3a est plus adapté puisqu'il permet un ajustement par commande externe.

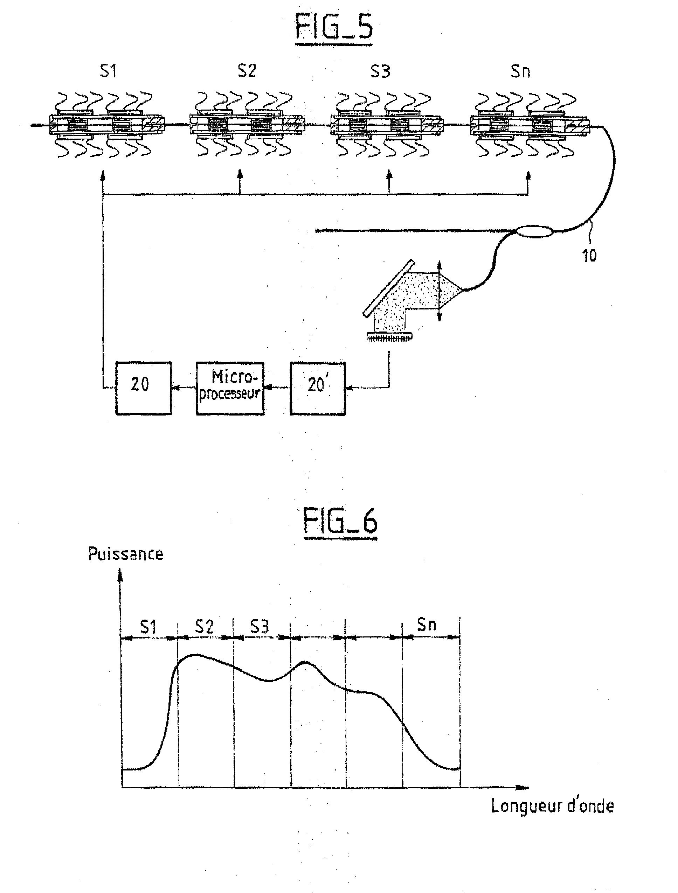

La figure 5 illustre un système optique d'égalisation de gain utilisant des filtres selon l'invention, conditionnés selon l'invention. Plusieurs filtres constitués de réseaux à long pas, LPG, peuvent avantageusement être combinés et accordés indépendamment les uns des autres dans un tel système optique d'égalisation de gain.

En effet, il est classique de devoir disposer d'une pluralité de filtres optiques pour achever une égalisation de gain complète, en particulier dans le cadre de systèmes DWDM tels que présentés précédemment. L'invention propose ainsi un système optique d'égalisation de gain comprenant une concaténation de filtres optiques $S_n$ selon l'invention, chaque filtre étant accordé dynamiquement et indépendamment au moyen d'un conditionnement selon l'invention. La concaténation des filtres élémentaires est nommée dans la suite filtre égaliseur complexe.

Dans un montage approprié, le guide d'onde 10 en sortie du filtre complexe est couplé à un système optoélectronique incluant des éléments optiques de focalisation (lentilles), de diffraction et de détection (photodiodes) ainsi que des éléments électroniques de contrôle et de commande 20, 20' et un micro-processeur.

Le système optoélectronique détermine les tensions et les courants de commande à appliquer à chaque bobine de chaque moyen de commande électromagnétique de chaque filtre élémentaire afin d'obtenir une égalisation affinée telle qu'illustrée sur le graphe de la figure 6.

Typiquement un déplacement d'environ 10mm peut être obtenu pour chaque réservoir le long d'un filtre élémentaire avec une tension de commande d'environ 10V qui ne représente que quelques milliampères de courant. Il est ainsi possible d'accorder spécifiquement et indépendamment chaque filtre élémentaire de l'égaliseur de gain pour une bande spectrale donnée avec des pertes optiques d'insertion limitées (<0.1 dB par filtre) et une dépendance à la polarisation réduite (<0.1dB par filtre).

En outre, le système selon l'invention présente un temps de réponse de quelques millisecondes et nécessite un apport d'énergie négligeable.

## Revendications

**1.** Filtre optique accordable comprenant un réseau de Bragg à long pas (5) inscrit dans une portion de guide d'onde optique (10) comprenant un coeur et une gaine optique (11), **caractérisée en ce que** la portion du guide d'onde comportant le réseau (5) est au moins partiellement immergé dans un milieu externe constitué de deux sections distinctes, une première section (1) dont l'indice de réfraction est plus élevé que celui de la gaine optique (11) et une seconde section (2) dont l'indice de réfraction est plus faible que celui de la gaine optique (11), le réseau à long pas étant au moins partiellement immergé dans une desdites sections de manière à accorder de façon quasiment indépendante la longueur d'onde et/ou le contraste de la réponse spectrale du filtre.

**2.** Filtre optique selon la revendication 1, **caractérisé en ce que** le réseau (5) est au moins partiellement immergé dans chacune des sections (1, 2) du milieu externe.

**3.** Filtre optique selon l'une des revendications 1 à 2, **caractérisée en ce que** le niveau d'immersion du réseau (5) dans les sections (1, 2) du milieu externe est variable dynamiquement.

**4.** Filtre optique selon l'une des revendications 1 à 3, **caractérisée en ce que** les sections (1, 2) du milieu externe sont composées de fluides (L1, L2).

**5.** Filtre optique selon l'une des revendications 1 à 3, **caractérisée en ce que** les sections (1, 2) du milieu externe sont composées de gels.

**6.** Filtre optique selon l'une des revendications 1 à 3, **caractérisée en ce que** les sections (1, 2) du milieu externe sont composées de polymères.

**7.** Filtre optique selon l'une des revendications précédentes, **caractérisée en ce que** le guide d'onde optique est une fibre optique ou un guide d'onde planaire.

**8.** Dispositif de conditionnement du filtre selon les revendications 1 à 7, **caractérisé en ce que** les sections (1, 2) du milieu externe sont disposées dans des réservoirs mobiles (41, 42) associés à des moyens de commande électromagnétiques (415).

**9.** Dispositif de conditionnement selon la revendication 8, **caractérisé en ce que** chaque réservoir (41) est composé d'un réceptacle (410) contenant un matériau (411) d'indice de réfraction distinct de celui de la gaine optique, le réceptacle (410) étant entouré de moyens de contrôle électromagnétiques (412).

**10.** Dispositif de conditionnement selon l'une des revendications 8 à 9, **caractérisé en ce que** les moyens de commande électromagnétiques (415) comportent une pluralité de bobines alimentées séparément en tension et en courant.

**11.** Dispositif de conditionnement selon l'une des revendications 8 à 9, **caractérisé en ce que** les moyens de commande électromagnétiques comportent un anneau magnétique (416).

**12.** Système optique d'égalisation de gain comprenant une pluralité de filtres optiques ($S_1$, $S_n$) selon l'une des revendications 1 à 7.

**13.** Système optique selon la revendication 12, **caractérisé en ce que** chaque filtre est accordé au moyen d'un dispositif de conditionnement de filtre selon l'une des revendications 8 à 11.

## FIG_1

## FIG_2a

Puissance normalisée (dBm)    PDL (dB)

Longueur d'onde(nm)

## FIG_2b

Puissance normalisée (dBm)    PDL (dB)

Longueur d'onde(nm)

## FIG_3a

## FIG_3b

## FIG_4

## FIG_5

S1          S2          S3          Sn

10

20 ← Micro-processeur ← 20′

## FIG_6

Puissance

S1 | S2 | S3 | | | Sn

Longueur d'onde

**Office européen des brevets**

## RAPPORT DE RECHERCHE EUROPEENNE

Numéro de la demande

EP 03 29 0928

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | YIN S ET AL: "A novel all-optic tunable long-period grating using a unique double-cladding layer" OPTICS COMMUNICATIONS, NORTH-HOLLAND PUBLISHING CO. AMSTERDAM, NL, vol. 196, no. 1-6, 1 septembre 2001 (2001-09-01), pages 181-186, XP004300744 ISSN: 0030-4018 * le document en entier * --- | 1-13 | H01S3/00 G02B6/16 G02B6/34 H04B10/17 H01S3/067 |
| A | KHALIQ S ET AL: "FIBER-OPTIC LIQUID-LEVEL SENSOR USING A LONG-PERIOD GRATING" OPTICS LETTERS, OPTICAL SOCIETY OF AMERICA, WASHINGTON, US, vol. 26, no. 16, 15 août 2001 (2001-08-15), pages 1224-1226, XP001110595 ISSN: 0146-9592 * le document en entier * --- | 1-13 | |
| A | US 6 058 226 A (STARODUBOV DMITRY) 2 mai 2000 (2000-05-02) * abrégé; figure 8 * --- | 1 | **DOMAINES TECHNIQUES RECHERCHES (Int.Cl.7)** H01S G02B H04B |
| A | EP 0 989 437 A (LUCENT TECHNOLOGIES INC) 29 mars 2000 (2000-03-29) * le document en entier * --- | 1 | |
| A | EP 1 063 741 A (FUJITSU LTD) 27 décembre 2000 (2000-12-27) * abrégé; figure 1 * ----- | 1 | |

Le présent rapport a été établi pour toutes les revendications

| Lieu de la recherche | Date d'achèvement de la recherche | Examinateur |
|---|---|---|
| LA HAYE | 9 juillet 2003 | Claessen, L |

EP 1 355 390 A1

**ANNEXE AU RAPPORT DE RECHERCHE EUROPEENNE**
**RELATIF A LA DEMANDE DE BREVET EUROPEEN NO.**   EP 03 29 0928

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

09–07–2003

| Document brevet cité au rapport de recherche | | Date de publication | Membre(s) de la famille de brevet(s) | | Date de publication |
|---|---|---|---|---|---|
| US 6058226 | A | 02–05–2000 | AUCUN | | |
| EP 0989437 | A | 29–03–2000 | US | 6055348 A | 25–04–2000 |
| | | | DE | 69904130 D1 | 09–01–2003 |
| | | | EP | 0989437 A1 | 29–03–2000 |
| | | | JP | 2000098146 A | 07–04–2000 |
| EP 1063741 | A | 27–12–2000 | JP | 2000341213 A | 08–12–2000 |
| | | | EP | 1063741 A2 | 27–12–2000 |
| | | | US | 6201636 B1 | 13–03–2001 |

EPO FORM P0460

Pour tout renseignement concernant cette annexe : voir Journal Officiel de l'Office européen des brevets, No.12/82